(19) Europäisches Patentamt
European Patent Office
Office européen des brevets

(11) Publication number: 0 343 142 A2

(12) # EUROPEAN PATENT APPLICATION

(21) Application number: 89870067.9

(22) Date of filing: 17.05.89

(51) Int. Cl.4: **A 01 N 25/04**
A 01 N 25/30
//(A01N25/04,57:20,47:30, 43:70),(A01N25/30,57:20,47:30, 43:70)

(30) Priority: 18.05.88 GB 8811763

(43) Date of publication of application: 23.11.89 Bulletin 89/47

(84) Designated Contracting States: AT BE CH DE ES FR GB GR IT LI LU NL SE

(71) Applicant: MONSANTO EUROPE S.A.
Avenue de Tervuren 270-272 Letter Box 1
B-1150 Brussels (BE)

(72) Inventor: Henriet, Michel Maurice
19 Rue Octave Lotin
B-5861 Cortil-Noirmont (BE)

Mitchell, Robert William
Robijnlaan 1
B-1900 Overijse (BE)

(74) Representative: Lunt, John Cooper et al
Monsanto Europe S.A. Patent Department Avenue de Tervuren 270-272 Letter Box No 1
B-1150 Brussels (BE)

(54) **Compositions containing glyphosate, simazine and diuron.**

(57) Compositions comprising, in an aqueous medium,

(a) a water-soluble salt of glyphosate having water solubility such that the composition contains at least 50 g/l of glyphosate acid equivalent;

(b) simazine, and

(c) diuron as particulate solids substantially free from particles having sizes greater than 15 µm;

(d) a surfactant which is a non-ioinic block copolymer of propylene oxide and ethylene oxide, the central block of the molecule being poly(propylene oxide) and the end groups being poly(ethylene oxides), in an amount of from 2 to 15% of the combined weight of the simazine and diuron;

e) a surfactant which is an ethoxylated $C_{8-18}$ alkanoyl ester of sorbitan, in an amount of at least 40% of the combined weight of the simazine and diuron;

f) a surfactant which is an ethoxylated fatty amine, in an amount of from 3 to 15% of the combined weights of surfactants (e) and (f); and

(g) a water-soluble/water-dispersible thickener, in an amount such that the composition has a viscosity at 25°C within the range 900 to 3500 cps; wherein the weight ratios of components (a) (expressed as glyphosate acid equivalent), (b) and (c) are from 1.0:0.4:0.5 to 1.0:3.0:3.5, have excellent long term storage stability.

EP 0 343 142 A2

## Description

# COMPOSITIONS CONTAINING GLYPHOSATE, SIMAZINE AND DIURON

This invention relates to compositions containing water-soluble salts of glyphosate, simazine and diuron.

The use of more than one herbicide is often necessary for the control or eradication of weeds in particular situations. Water-soluble salts of N-phosphonomethylglycine (N-phosphonomethylglycine is herein referred to as glyphosate) are contact herbicides which are very effective in killing existing vegetation, but are non-persistent, so that other residual herbicides may be required to provide season-long control. 2-Chloro-4,6-ethyl-amino-s-triazine) and 3-(3,4-dichlorophenyl)-1,1-dimethylurea (herein referred to as simazine and diuron respectively), are examples of such residual herbicides, simazine being used to control certain annual broadleaf weeds and grasses, and diuron to control broadleaf species that are resistant to simazine.

The various herbicides can, if desired, be applied sequentially or by "tank mixing" the individual herbicides immediately prior to application. However, it is more convenient for the user to have available a pre-mixed concentrate containing all the herbicides in the optimum proportions, and which can be diluted, as and when required, to provide sprayable formulations.

To be commercially acceptable, it is essential that such concentrates should have long shelf lives. This means that there must be no significant chemical interaction between the components of the concentrate, and also that there must be no more than a minimum of physical separation of the components of a multi-phase mixture on storage, and that homogeneity is restorable, if necessary, simply by shaking the container. A further requirement for a commercially acceptable product is that the concentrate must be easily dispersible in water to provide agglomerate-free, sprayable herbicide compositions of any desired herbicide concentration.

The successful production of such concentrates is rarely straightforward, particularly where the concentrate is a dispersion of solids in a liquid. This is the situation in the present invention, where simazine and diuron are solids while the commercial forms of glyphosate are aqueous solutions of a water-soluble salt.

Our European patent application 8787 0150.7 discloses concentrated compositions comprising simazine and diuron dispersed in an aqueous solution of a water-soluble salt of glyphosate. The compositions include combinations of surfactants/dispersants which provide concentrates having long shelf lives, but the application mentions the fact that these combinations were found only after extensive evaluations of a range of surfactants, most of which were found to be unsuitable.

The present invention provides concentrated compositions meeting the above requirements for commercial acceptability, using other combinations of surfactants/dispersants.

A composition of the invention comprises, in an aqueous medium,

(a) a water-soluble salt of glyphosate having water solubility such that the composition contains at least 50 grams/litre of glyphosate acid equivalent;

(b) simazine, and

(c) diuron as particulate solids substantially free from particles having sizes greater that 15 µm;

(d) a surfactant which is a non-ionic block copolymer of propylene oxide and ethylene oxide, the central block of the molecule being poly(propylene oxide) and the end groups being poly(ethylene oxides), in an amount of from 2 to 15% of the combined weight of the simazine and diuron;

(e) a surfactant which is an ethoxylated $C_{8-18}$ alkanoyl ester of sorbitan, in an amount of at least 40% of the combined weight of the simazine and diuron;

(f) a surfactant which is an ethoxylated fatty amine, in an amount of from 3 to 15% of the combined weights of surfactants (e) and (f); and

(g) a water-soluble/water-dispersible thickener, in an amount such that the composition has a viscosity at 25°C within the range 900 to 3500 cps; wherein the weight ratios of components (a) (expressed as glyphosate acid equivalent), (b) and (c) are from 1.0:0.4:0.5 to 1.0:3.0:3.5.

Water-soluble salts of glyphosate which can be used in the compositions of the invention include the alkali metal salts, for example sodium salts, trialkylsulphonium salts, for example trimethylsulphonium, and amine salts, for example salts of glyphosate with dimethylamine, isopropylamine or ethylenediamine. The mono(isopropylamine) salt is particularly suitable.

Simazine and diuron are both commercially available as technical grades having active ingredient contents of about 94-98%. No purification of such technical grades is necessary for their own use in the present invention, but normally particle size reduction is required.

Surfactants of the class (d) can be represented by the general formula

$$HO(CH_2CH_2O)_x(\underset{\displaystyle CH_3}{CH}CH_2O)_y(CH_2CH_2O)_zH$$

where x and z represent the number of ethylene oxide units and y represents the number of propylene oxide units. A range of surfactants within this class is available commercially under the trade names "Pluronic® PE" from BASF, "Synperonic® PE" from ICI and "Genapol® PF" from Hoechst. They are conveniently characterised according to the molecular weight of the central poly(propylene oxide) block, the combined molecular weight of the poly(ethylene

oxide) blocks expressed as a percentage of the total molecular weight, and the hydrophile/lipophile balance (HLB) of the material. Each commercial surfactant is in fact a mixture of molecules having values of x, y and z which differ over a more or less narrow range, so that the molecular weights and percentages quoted are average values.

In general, the surfactants become more hydrophilic as the percentage of poly(ethylene oxide) units increases, and more lipophilic as the molecular weight of the poly(propylene oxide) block increases. The preferred surfactants are those having HLB's within the range from about 9 to about 16. Of such surfactants, those where the poly(propylene oxide) block has a molecular weight of from about 3000 to about 3500 and the percentage of poly (ethylene oxide) is from about 20 to about 60, have been found to give particularly good results.

The amount of surfactant (d) in the composition is from 2 to 15%, and preferably from 4 to 10%, of the combined weight of simazine and diuron. The optimum amount will vary depending on the particular surfactant used, but is often within the range 5 to 7% of the combined weight of simazine and diuron.

Regarding the surfactants of class (e) the ethoxylated $C_{8-18}$ alkanoyl monoesters of sorbitan are especially useful, although the presence of a certain amount of di- or higher esters need not be avoided. Like the surfactants (d), the commercially available materials of category (e) are mixtures, each containing compounds with a narrow range of values for the degree of ethoxylation, and usually for the number of carbon atoms in the alkanoyl group. The average value for the degree of ethoxylation in surfactants (e) useful in the present invention may, for example, vary from about 15 to about 25, each average being that of a mixture containing compounds having degrees of ethoxylation of perhaps about 3, on each side of the average. The alkanoyl group may be, for example, a $C_{10-16}$ alkanoyl group, examples of which are caproyl, lauroyl, myristoyl and palmitoyl; surfactants containing mixtures of such alkanoyl groups can be used. A particularly effective surfactant of this class is Tween® 20 (ICI) described as a 20 mol ethoxylated sorbitan monolaurate. Radiasurf® 7137 (Oleofina) is a similar product.

In the present invention, the surfactants of class (e) have a dual function of contributing to the stability of the composition and of counteracting an antagonism in herbicidal activity between glyphosate and the other herbicides, especially diuron. The quantity of surfactant (e) used is primarily related to the amounts of simazine and diuron in the composition. It should normally be at least 40%, and is preferably within the range 45% to 70% of the combined weight of the simazine and diuron. Larger amounts of surfactant (e) than this can be used, but they do not significantly further enhance the stability of the composition or the anti-antagonism effect.

Surfactants of class (f) are ethoxylated fatty amines of the formula

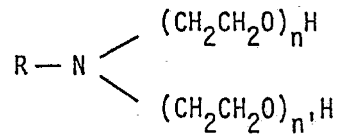

where R represents a straight- or branched-chain alkyl or alkenyl having from about 8 to about 22 carbon atoms, and n and n′ are integers representing the degree of ethoxylation.

Commercially available amine surfactants within the above formula are often mixtures rather than single compounds. They include ethoxylated derivatives of "cocoamine" in which the groups R correspond to alkyl groups derived from myristic, lauric, palmitic and stearic acids. The average number of carbon atoms in R in cocoamine is 12-14. Other examples are ethoxylated derivatives of "oleylamine", where the principal carbon chain of R corresponds to that of oleic acid (18 carbon atoms), with small amounts of shorter and longer chains, of stearylamine (18 carbon atoms), and of "tallow amine". In tallow amine, R is mainly a mixture of hexadecyl and octadecyl. The commercial surfactants are also usually mixtures of molecules having various values of n + n′, and surfactants having a low average value of n + n′ may contain a proportion of non-ethoxylated or mono-ethoxylated amines.

In general, lower molecular weight ethoxylated amine surfactants are preferred to higher molecular weight members of the class, because a given weight of the former provides a higher molecular concentration of surfactant than the same weight of the latter. In respect of the group R, the most preferred surfactants are those where the number or average number of carbon atoms in the group or groups R is from about 10 to about 20. As regards the value or average value of n + n′, in preferred surfactants this lies in the range from about 1.5 to about 12, more especially in the range from about 2 to about 10. Specific examples of preferred surfactants are ethoxylated derivatives of cocoamine, tallow amine and oleylamine where in each case n + n′ has an average value of about 2, about 5 or about 8.

The amount of surfactant (f) in a composition of the invention is from 3% to 15% of the combined weights of surfactants (e) and (f). Preferred amounts are from 5 to 10%, while the optimum depends on the particular surfactant used. In the case of the surfactant derived from cocoamine and having a degree of ethoxylation of about 2, the optimum amount is from 6 to 8% of the combined weights of surfactants (e) and (f).

Water soluble/dispersible thickeners of various classes are suitable for use in the present compositions. Many such thickeners are cellulose derivatives, for example hydroxyethyl or hydroxypropyl derivatives of cellulose or methyl cellulose. Preferred thickeners are xanthate gum polysaccharides, especially those that are anionic, for example Rhodopol® (Rhône-Poulenc) and Shellflo®-S (Shell Company). The latter is an anionic complex polysaccharide produced by controlled microbial fermentation. Preferred amounts of thickeners are amounts corresponding to composition viscosities within the range

1000 to 3500, more especially 1200 to 3000 cps at 25°C.

The optimum viscosity depends on various factors, including the particle size characteristics of the simazine and diuron. As indicated above, the composition should be substantially free of particles having a size greater than 15 µm. Preferably, at least 95% of the particles are less than 10 µm, and at least 75% less than 6 µm. Compositions having a mean particle size not greater than 7 µm, for example in the range 2 to 5 µm, have been found to have excellent long-term storage stability.

Compositions of the invention that are likely to encounter low temperatures during storage or use, will contain an anti-freeze additive as an additional component. The required amount is typically from 2 to 10% of the weight of the composition. Suitable anti-freeze additives are ethylene glycol, diethylene glycol and propylene glycol.

The compositions of the invention also usually contain a small quantity, for example up to 0.5% of the total weight of the composition, of a defoamer. Most commercially available defoamers are silicone derivatives, for example Wacker SRE manufactured by Wacker Chemie and Rhodorsil 454 (Rhône-Poulenc), but others are available.

Preferred compositions of the invention contain the water-soluble salt of glyphosate at a concentration equivalent to at least 80 g/l of glyphosate acid. The upper limit depends on various factors, for example the particular salt used and the amounts of simazine and diuron which are to be included in the composition. Where the glyphosate salt is the mono(isopropylamine) salt, for example, the solubility of the glyphosate salt is not in itself a limiting factor on how much can be included in the composition. The limit is imposed by the condition that the composition must contain from 0.5 to 3.0 parts by weight of simazine and from 0.5 to 3.5 parts by weight of diuron per part by weight of glyphosate acid equivalent.

The upper limit in practice for the combined simazine/diuron concentration is about 400 g/l, which at the lower simazine/diuron end of the above ratio range corresponds to about 190 g/l of glyphosate acid equivalent. The preferred compositions containing at least 80 g/l of glyphosate acid equivalent will therefore contain less simazine and/or diuron than the amount arithmetically permitted by the upper end of the above ratio range. Particularly useful are compositions containing 80-130 g/l of glyphosate acid equivalent and 250-450 g/l total simazine and diuron, with the simazine and diuron present in a weight ratio within the range 1:1.0 to 1:2.0.

In a preferred method for the production of the compositions of the invention, the preparation is carried out in various steps as follows. In the first, (A), the required quantities of simazine and diuron are mixed with surfactant (d), and water. If an anti-freeze agent is to be included in the composition, it is conveniently added at this stage. The addition of a defoamer is also desirable. In step (B) the mixture from (A) is wet-milled and homogenised using wet grinding equipment such as a Dyno mill until the solids have been reduced to the required particle size. To stabilise the suspension thus obtained, it is usually advantageous to add at least part of the thickening agent. In the next step (C), the suspension from (B) is mixed with an aqueous solution of the required water-soluble glyphosate salt, with the surfactants (e) and (f), and; if required, with additional thickening agent. The order of addition of the components is not critical, but in a preferred procedure, any additional thickening agent is added gradually to the stirred suspension, followed by the aqueous solution of glyphosate salt and by the surfactants, with surfactant (f) preferably being added prior to surfactant (e).

The amount of water used in (A) and the concentration of the aqueous solution of glyphosate salt used in (C) is such that the concentrations of the various components at the completion of stage (C) are no less than those required in the finished composition. If necessary, therefore, the concentrations can be reduced by mixing the suspension from (C) with water.

Optional additional ingredients which can be incorporated in the compositions of the invention in small amounts include for example biocides, dyes and anti-corrosion agents.

The compositions of this invention are readily pourable and are easily dispersed in water. They can be diluted on site with water to provide agglomerate-free sprayable formulations of recommended concentration for weed control.

The invention is illustrated by the following Examples:

## Example 1

The following ingredients were mixed and then wet milled in a Dyno Mill:

| Ingredients | Parts by Weight |
|---|---|
| Technical simazine(1) | 19.08 |
| Technical diuron(2) | 33.13 |
| Surfactant d (3) | 3.00 |
| Monopropylene glycol | 8.63 |
| Silicone Defoamer | 0.10 |
| Water | 32.06 |

(1) 97% active
(2) 95% active
(3) Pluronic PE 10500

The particle size distribution of the product was <3 µm, 51%; <6 µm, 87%; <10 µm, 98%; <15 µm, 100%. Mean particle size (Coulter Counter) 2.9 µm.

A water-dispersible thickening agent, Shellflo-S, prepared as a 30% aqueous dispersion, (4.0 parts by weight), was then added to the milled product in a separate vessel.

In the second stage of the process, additional thickening agent was added to the stirred fluid suspension from the first stage, followed by a 62% by weight solution of the mono(isopropylamine) salt

of glyphosate (IPAG solution) diluted with water in an amount required to give the concentrations of glyphosate acid equivalent, simazine and diuron shown below for the final composition. With continued stirring, Genamin C-020 surfactant (an ethoxylated cocoamine having a degree of ethoxylation of about 2), followed by Tween 20 surfactant were added. The quantities of materials in the second stage were:

| Ingredients | Parts by weight |
|---|---|
| First stage suspension | 100.00 |
| Shellflo-S (30% aqueous dispersion) | 4.43 |
| IPAG solution | 48.15 |
| Water | 27.83 |
| Genamin C-020 | 2.11 |
| Tween 20 | 28.49 |

The final product had a density of 1.15 g/ml, a viscosity at 25°C of 1200 cps, and the concentrations of the herbicidal ingredients were approximately: 120 g/l glyphosate (as glyphosate acid), 100 g/l simazine, 170 g/l diuron. These concentrations correspond to weight ratios of 1.0:0.83:1.42.

The finished formulation is stable, i.e. no phase-separation occurs, at temperatures from -10° to +40°C over periods of several weeks.

## Example 2

The following ingredients were mixed and then wet milled in a Dyno Mill:

| Ingredients | Parts by Weight |
|---|---|
| Technical simazine(1) | 30.07 |
| Technical diuron(2) | 30.70 |
| Surfactant d(3) | 3.00 |
| Monopropylene glycol | 8.70 |
| Silicone Defoamer | 0.10 |
| Water | 23.43 |

(1) 97% active
(2) 95% active
(3) Pluronic PE 10500

The particle size distribution of the product was <3µm, 43%; <6µm, 76%; <10µm, 95%; <15µm, 99%. Mean particle size (Coulter Counter) 3.4µm.

A water-dispersible thickening agent, Shellflo-S, prepared as a 30% aqueous dispersion, (4.0 parts by weight), was then added to the milled product in a separate vessel.

In the second stage of the process, a 62% by weight solution of the mono(isopropylamine) salt of glyphosate (IPAG solution), diluted with water in an amount required to give the concentrations of glyphosate acid equivalent, simazine and diuron shown below for the final composition, was added to the stirred fluid suspension from the first stage. With continued stirring, Genamin C-020 surfactant, followed by Tween 20 surfactant were added. The quantities of materials in the second stage were:

| Ingredients | Parts by Weight |
|---|---|
| First stage suspension | 100.00 |
| IPAG solution | 31.90 |
| Water | 11.51 |
| Genamin C-020 | 1.68 |
| Tween 20 | 22.64 |

The final product had density of 1.15 g/ml, a viscosity at 25°C of 3400 cps, and the concentrations of the herbicidal ingredients were approximately: 100 g/l glyphosate (as glyphosate acid), 200 g/l simazine, 200 g/l diuron. These concentrations correspond to weight ratios of 1.0:2.0:2.0.

## Example 3

A composition was prepared by adding a 62% weight solution of the mono(isopropylamine) salt of glyphosate (IPAG solution), diluted with water in an amount required to give the concentrations of glyphosate acid, simazine and diuron shown below, to a stirred "first stage suspension" prepared as described in Example 2. With continued stirring, Genamin C-020 surfactant, followed by Tween 20 surfactant, were added. The quantities of materials in the second stage were:

| Ingredients | Parts by Weight |
|---|---|
| First stage suspension | 100.00 |
| IPAG solution | 25.41 |
| Water | 18.00 |
| Genamin C-020 | 1.68 |
| Tween 20 | 22.64 |

The final product had a density of 1.15 g/ml, a viscosity at 25°C of 2800 cps, and the concentrations of the herbicidal ingredients were approximately: 80 g/l glyphosate (as glyphosate acid), 200 g/l simazine, 200 g/l diuron. These concentrations correspond to weight ratios of 1.0:2.5:2.5.

## Claims

1. A composition comprising, in an aqueous medium,

a) a water-soluble salt of glyphosate having water solubility such that the composition contains at least 50 g/l of glyphosate acid equivalent;

(b) simazine, and (c) diuron as particulate solids substantially free from particles having sizes greater than 15 µm;

(d) a surfactant which is a non-ionic block copolymer of propylene oxide and ethylene oxide, the central block of the molecule being poly(propylene oxide) and the end groups being poly(ethylene oxides), in an amount of from 2 to 15% of the combined weight of the

simazine and diuron;

(e) a surfactant which is an ethoxylated $C_{8-18}$ alkanoyl ester of sorbitan, in an amount of at least 40% of the combined weight of the simazine and diuron;

(f) a surfactant which is an ethoxylated fatty amine, in an amount of from 3 to 15% of the combined weights of surfactants e) and (f); and

(g) a water-soluble/water-dispersible thickener, in an amount such that the composition has a viscosity at 25° C within the range 900 to 3500 cps;

wherein the weight ratios of components (a) (expressed as glyphosate acid equivalent), (b) and (c) are from 1.0:0.4:0.5 to 1.0:3.0:3.5.

2. A composition according to Claim 1 in which the water-soluble salt of glyphosate is the mono(isopropylamine) salt which is present in an amount such that the composition contains 80-130 g/l of glyphosate acid equivalent and 250-450 g/l total simazine and diuron, with the simazine to diuron weight ratio being within the range 1:1.0 to 1:2.0.

3. A composition according to either of Claims 1 and 2 in which the surfactant (d) has a hydrophile/lipophile balance in the range from about 9 to about 16.

4. A composition according to Claim 3 in which, in the surfactant (d), the poly(propylene oxide) block has a molecular weight of from about 3000 to about 3500, and the percentage of poly (ethylene oxide) is from about 20 to about 60, the surfactant (d) being present in an amount of from 4 to 10% of the combined weight of simazine and diuron.

5. A composition according to any of Claims 1 to 4 in which surfactant (e) is an ethoxylated $C_{10-16}$ alkanoyl monoester of sorbitan having an average degree of ethoxylation of from 15 to 25 and is present in an amount of from 45% to 70% of the combined weight of simazine and diuron.

6. A composition according to any of Claims 1 to 5 in which surfactant (f) is an ethoxylated derivative of cocoamine, tallow amine or oleylamine having a degree of ethoxylation of about 2, about 5 or about 8, and is present in an amount of from about 5 to about 10% of the combined weight of surfactants (e) and (f).

7. A composition according to any of Claims 1 to 6 in which the water-soluble/water-dispersible thickener is an anionic complex polysaccharide, and is present in an amount such that the composition has a viscosity at 25° C within the range 1200 to 3000 cps.

8. A composition according to any of Claims 1 to 7 in which at least 95% of the simazine and diuron particles have a size less than 10 μm and the mean particle size is not greater than 7 μm.

9. A composition according to any of Claims 1 to 8 which also contains 2 to 10% of the weight of the composition of an anti-freeze additive.

10. A composition according to any of Claims 1 to 9 which also contains up to 0.5% of the weight of the composition of a defoamer.

11. A process for the production of a composition according to Claim 1, which comprises

(A) mixing the required quantities of simazine and diuron with the surfactant (d) and water, optionally with the addition of an anti-freeze agent and a defoamer,

(B) wet-milling the mixture thus formed until the solids have been reduced to the required particle size and optionally mixing the milled suspension with at least part of the thickener,

(C) mixing the suspension from (B) with an aqueous solution of water-soluble glyphosate salt, with surfactants (e) and (f), and, if required, with additional thickener.